# EUROPEAN PATENT SPECIFICATION

(11) **EP 1 921 872 B1**
(45) Date of publication and mention of the grant of the patent: **23.02.2011**
(21) Application number: 06775504.1
(22) Date of filing: 25.08.2006
(51) Int. Cl.: H04L 12/24, H04W 92/14

(54) **METHOD AND DEVICE FOR CONFIGURING THE GB-INTERFACE IN A GPRS MOBILE PACKET NETWORK**
VERFAHREN UND VORRICHTUNG ZUM KONFIGURIEREN DER GB-SCHNITTSTELLE EINES GPRS MOBILEN PAKETNETZES
PROCEDE ET DISPOSITIF DE CONFIGURATION D'UNE INTERFACE GB DANS UN RESEAU A PAQUETS MOBILE GPRS

(30) Priority: 01.09.2005 CN 200510093686
(43) Date of publication of application: 14.05.2008
(73) Proprietor: Huawei Technologies Co., Ltd., Longgang District, Shenzhen Guangdong 518129 (CN)
(72) Inventor: CHOUDHARY, Suman, Guangdong 518129 (CN); LEI, Zhuohui, Guangdong 518129 (CN); MA, Miansheng, Guangdong 518129 (CN)
(74) Representative: Thun, Clemens
(86) International application number: PCT/CN2006/002186
(87) International publication number: WO 2007/025463

(56) References cited:
- US-A1- 2001 033 563
- US-B1- 6 317 421
- US-B1- 6 898 425
- US-B1- 6 920 116
- "Digital cellular telecommunications system (Phase 2+); General Packet Radio Service (GPRS); Base Station System (BSS) - Serving GPRS Support Node (SGSN) Interface; Network Service (3GPP TS 48.016 version 6.4.0 Release 6); ETSI TS 148 016" ETSI STANDARDS, LIS, SOPHIA ANTIPOLIS CEDEX, FRANCE, vol. 3-G2, no. V6.4.0, 1 July 2005 (2005-07-01), XP014030814 ISSN: 0000-0001
- NOKIA: "CR 08.16 Gb/IP: Mixed Mode Load Sharing proposal for CR 08.16 A021r1" 3GPP TSG GERAN ADHOC #1, [Online] 7 August 2000 (2000-08-07), - 11 August 2000 (2000-08-11) pages 1-5, XP002500400 Helsinki, Finland Retrieved from the Internet: URL:www.3gpp.org>

## Description

### Field of the Invention

The invention relates to the field of network communications, and in particular, to a method and a device for interface configuration in a mobile packet network.

### Background of the Invention

General Packet Radio Service (GPRS) is a mobile packet data service developed upon the basis of Global System for Mobile Communication (GSM). GPRS introduces the functional entities for packet switching into the GSM digital mobile communication network so as to transmit data in a packet mode. Thereby, the reliability of data transmission may be improved.

A GPRS system extends services based on the GSM circuit switched system, to support the requirements of the mobile users for accessing the Internet or other packet data networks by using packet data mobile terminals.

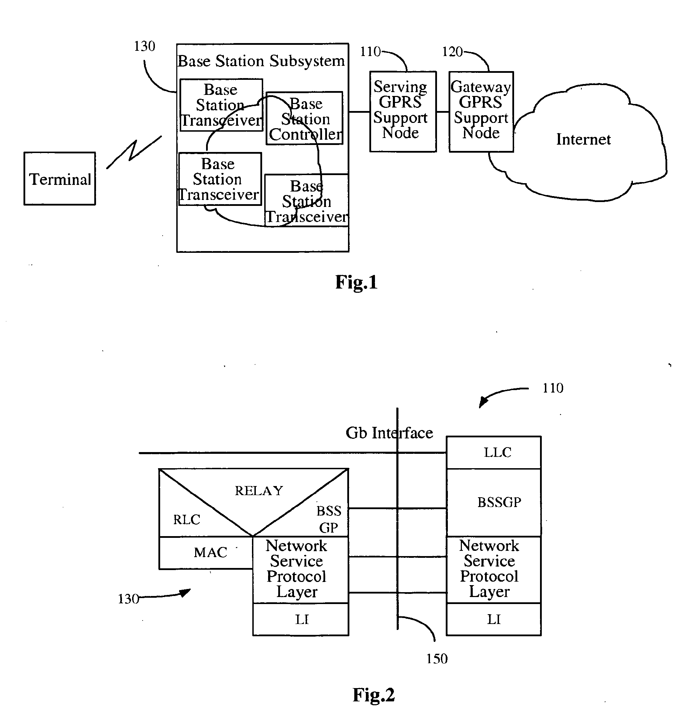

As shown in Figure 1, to support mobile packet data services, the GPRS system includes functional entities, such as a Serving GPRS Support Node (SGSN) 110 and a Gate GPRS Supporting Node (GGSN) 120. The serving GPRS support node 110 exchanges information with a Base Station Subsystem (BSS) 130.

Now refer also to Figure 2, which is an exemplary diagram showing the protocol hierarchy used over Gb interface 150 between the BSS 130 and the SGSN 110 when applying the GPRS system shown in Figure 1 to data transmission services.

The Gb interface 150 includes Network Service (NS) protocol layer employed primarily for transmitting data units for an upper layer protocol over the Gb interface 150. Generally, the data is transferred by using Frame Delay (FR) mechanism.

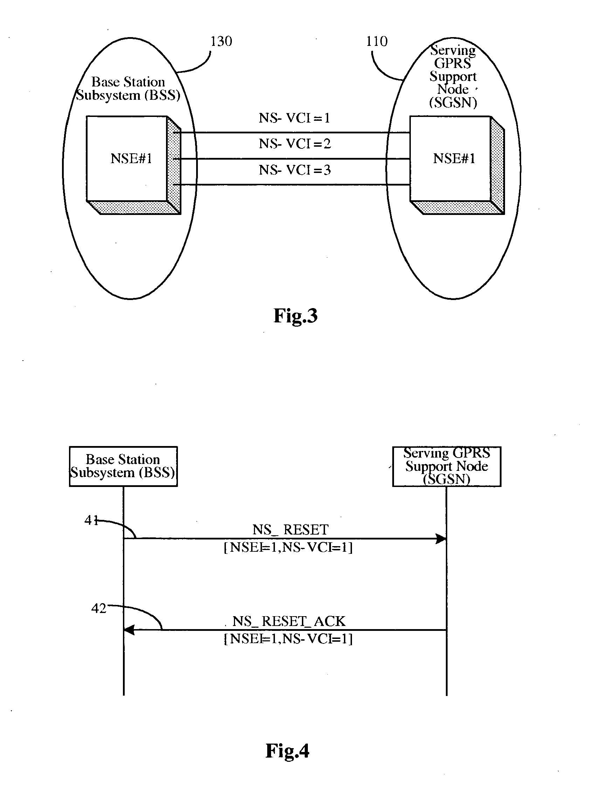

As shown in Figure 3, in the prior art, the data transmission between the BSS 130 and the SGSN 110 by using NS protocol corresponds to the data exchange between a pair of Network Service Entities (NSEs). One NSE requires one or more NS Virtual Connection (NS-VC) for actual data transmission. For example, during data transmission using frame relay, one NS-VC corresponds to a specific Permanent Virtual Connection (PVC) of frame relay.

In other words, in the prior art, the BSS 130 or the SGSN 110 is required to carry specific Network Service Entity Identifier (NSEI) and NS Virtual Connection Identifier (NS-VCI) in messages during data transmission. Thus, when receiving a message, the receiver may distinguish which NSE sends the message via which connection based on the NSEI and the NS-VCI.

The NS-VCI information should be consistent on both of BSS and SGSN in the network so as to ensure the reliability of data transmission.

In the prior art, in order to maintain the consistency of the NS-VC status of entities at both ends of the Gb interface, a BSS or an SGSN may initiate a RESET process according to the local NS-VC status. Now refer to Figure 4, the message exchange process of the RESET includes:

Block 41: a first entity at one end of the Gb interface (for example, BSS) sends to a second entity at the opposite end the other end of the Gb interface (for example, SGSN) an NS RESET (Network Service protocol Reset) message carrying NSEI, NS-VCI and Cause of the BSS.

Block 42: after receiving the NS RESET message, the second entity (the SGSN) processes according to the local condition, returns an NS-RESET ACK (Network Service protocol Reset Acknowledgement) message carrying the NSEI and NS-VCI value of the SGSN.

However, in the prior art, there is no mutual configuration of the NS-VCI information on the Gb interface during the information exchange process. Thus, the consistency of the NS-VCI information configuration on the Gb interface can not be ensured. At present, manual configuration is usually adopted to configure the NS-VCI information on the Gb interface. In other words, an administrator has to configure the NS-VCI information manually, to ensure the accuracy and consistency of the information data on the Gb interface.

Nevertheless, manual configuration has the disadvantage of overwhelming the administrator with great administrative workload when there is a large amount of NS data to be configured and to be modified frequently. Moreover, manual configuration tends to cause inconsistent configuration of entities at the two ends because the manual configuration is done respectively at the two ends. This may affect the performance of data transmission.

The document "Digital cellular telecommunications system (Phase 2+); General Packet Radio Service (GPRS); Base Station System (BSS) - Serving GPRS Support Node (SGSN) interface; Network Service (3GPP TS 48.016 version 6.4.0 Release 6); ETSI TS 148 016" of ETSI STANDARDS, LIS, Sophia Antipolis Cedex, France, vol. 3-G2, no. V6.4.0, July 1, 2005 discloses the Network Service used on the BSS to Serving SGSN interface (Gb interface). In that document, the communication between adjacent layers and the services provided by the layers are distributed by use of abstract service primitives. However, only externally observable behavior resulting from the description is normatively prescribed by that document. The service primitive model used in that document is based on the concepts developed in ITU-T Recommendation X.200.

### Summary of the Invention

The present invention provides a method and a device for interface configuration in mobile packet network, so as to configure the parameters of Gb interface in the mobile packet network automatically, and to ensure the accuracy and consistency of the parameters of the interface effectively.

According to one aspect of the present invention, a method for interface configuration in a mobile packet network includes:
in a General Packet Radio Service (GPRS) mobile packet network, sending, by a first entity at one end of a Gb interface between a Base Station Subsystem, hereinafter referred to as BSS, and a Serving GPRS Support Node, hereinafter referred to as SGSN, a Network Service protocol Virtual Connection Identifier (NS-VCI) information request message to a second entity at the other end of the interface, wherein the NS-VCI information request message includes NS-VCI information request;
receiving, by the first entity, NS-VCI information which is returned by the second entity when the second entity receives the NS-VCI information request message;
the first entity being the BSS and the second entity being the SGSN, or the first entity being the SGSN and the second entity being the BSS.

Optionally, sending by the first entity the NS-VCI information request message to the second entity includes:
sending a Network Service protocol Reset (NS_RESET) message to the second entity, the NS_RESET message carrying NS-VCI information request.

Optionally, the NS-VCI information request is carried in the NS_RESET message by:
adding information of a new cause value configured to request for a new Network Service protocol Virtual Connection (NSVC) and adding a NS-VCI field value indicating the second entity to assign a new NS-VCI value.

Optionally, the NS-VCI information request message is sent by the first entity to the second entity when the first entity starts, the first entity requiring NS-VCI configuration.

According to another aspect of the invention, a method for interface configuration in a mobile packet network includes:
in a General Packet Radio Service (GPRS) mobile packet network, receiving, by a first entity at one end of a Gb interface between a Base Station Subsystem, hereinafter referred to as BSS, and a Serving GPRS Support Node, hereinafter referred to as SGSN, a Network Service protocol Virtual Connection Identifier (NS-VCI) information request message sent from a second entity at the other end of the interface;
processing the NS-VCI information request message, to obtain NS-VCI information request contained in the NS-VCI information request message;
returning, by the first entity, local NS-VCI information to the second entity based on the NS-VCI information request;
the first entity being the BSS and the second entity being the SGSN, or the first entity being the SGSN and the second entity being the BSS.
Optionally, returning by the first entity the local NS-VCI information to the second entity includes:
returning a Network Service protocol Reset Acknowledgement (NS_RESET_ACK) message containing NS-VCI information to the second entity

Optionally, before returning by the first entity the local NS-VCI information to the second entity, the method further includes: performing a reset process at the first entity

Optionally, returning by the first entity the local NS-VCI information to the second entity includes: sending a NS_RESET_ACK message containing NS-VCI information to the second entity when the first entity fails to recognize the NS-VCI information request message.

Optionally, the interface between the GPRS network and the mobile communication network includes: a Gb interface between a Base Station Subsystem (BSS) and a Serving GPRS Support Node (SGSN) the first entity at one end being the BSS and the second entity at the other end being the SGSN, or the first entity being the SGSN and the second entity being the BSS.

According to another aspect of the present invention, an information request device includes:
a Network Service protocol Virtual Connection Identifier (NS-VCI) information request message generating unit, adapted to generate a NS-VCI information request message containing NS-VCI information request;
a NS-VCI information request message sending unit, adapted to send the NS-VCI information request message to an entity at the other end of a Gb interface between a Base Station Subsystem, hereinafter referred to as BSS, and a Serving GPRS Support Node, hereinafter referred to as SGSN;
a NS-VCI information obtaining unit, adapted to obtain NS-VCI information returned by the entity at the other end of the interface in response to the NS-VCI information request message;
the entity being the BSS, or the entity being the SGSN.

Optionally, the NS-VCI information request message generating unit is a Network Service protocol Reset (NS_RESET) message generating unit adapted to carry NS-VCI information request in a NS_RESET message to generate a NS-VCI information request message; the NS-VCI information obtaining unit is a Network Service protocol Reset Acknowledgement (NS_RESET_ACK) message processing unit adapted to obtain NS-VCI information from a NS_RESET_ACK message returned from the entity at the other end of the interface.

According to still another aspect of the present invention, an information configuration device includes:
a Network Service protocol Virtual Connection Identifier (NS-VCI) information request message analyzing unit, adapted to analyze a NS-VCI information request message sent from an entity at the other end of a Gb interface between a Base Station Subsystem, hereinafter referred to as BSS, and a Serving GPRS Support Node, hereinafter referred to as SGSN, to obtain NS-VCI information request contained in the NS-VCI information request message;
a NS-VCI information sending unit, adapted to send local NS-VCI information to the entity at the other end of the interface in accordance with the NS-VCI information request;
the entity being the BSS, or the entity being the SGSN.

Optionally, the NS-VCI information request message analyzing unit is a Network Service protocol Reset (NS_RESET) message analyzing unit adapted to determine that the NS_RESET message sent from the entity at the other end of the interface carries NS-VCI information request;
the NS-VCI information sending unit includes: a Network Service protocol Reset Acknowledgement (NS_RESET_ACK) message generating unit adapted to carry the local NS-VCI information in a NS_RESET_ACK message; a NS_RESET_ACK message sending unit adapted to send the NS_RESET_ACK message to the entity at the other end of the interface.
According to another aspect of the invention, there is provided a Serving GPRS Support Node (SGSN) including an information request device and/or an information configuration device as described above.
According to another aspect of the invention, there is provided a Base Station Subsystem (BSS), including an information request device and/or an information configuration device as described above.

In the method according to embodiments of the present invention, an entity at one end of an interface between a GPRS network and a mobile communication network sends a Network Service protocol Virtual Connection Identifier (NS-VCI) information request message to an entity at the other end, the entity at the other end returns local NS-VCI information to the entity at the one end sending the NS-VCI information request message after receiving the NS-VCI information request message. Thus, NS-VC configuration information on the interface may be configured and managed uniformly, the NS-VC interface configuration may be simplified, the workload of those in charge of the configuration and management may be relieved, and the risk of network failure caused by errors in configuration data may be reduced.

In addition, it is relatively simple by extending NS protocol RESET process messages for information request and transmission.

In summary, the implementations of the present invention are not only able to ensure the accuracy and consistency of interface parameters, but also able to improve the reliability of data transmission in communication network.

### Brief Description of the Drawings

Figure 1 is an exemplary diagram of a GPRS system in the prior art.
Figure 2 is an exemplary diagram of protocol hierarchy employed by a Gb interface of the system as shown in Figure 1;
Figure 3 is an exemplary diagram of relationship between NSE and NS-VC of the Gb interface in the prior art;
Figure 4 is an exemplary diagram of a NS RESET process of the Gb interface in the prior art;
Figure 5 is a flow diagram of an interface configuration method according to an embodiment of the present invention;
Figure 6 is an exemplary diagram showing a NS_RESET message in an embodiment according to the present invention;
Figure 7 is an exemplary diagram showing a NS_RESET_ACK message in an embodiment according to the present invention;
Figure 8 is an exemplary diagram showing the process of an interface configuration method according to an embodiment of the present invention;
Figure 9 is a block diagram of an interface information request device according to an embodiment of the present invention;
Figure 10 is a block diagram of an interface information configuration device according to an embodiment of the present invention.

### Detailed Description of the Embodiments

In embodiments of the present invention, the NS-VCI information is configured and managed uniformly by interchanging messages automatically between entities at both ends in the mobile packet network.

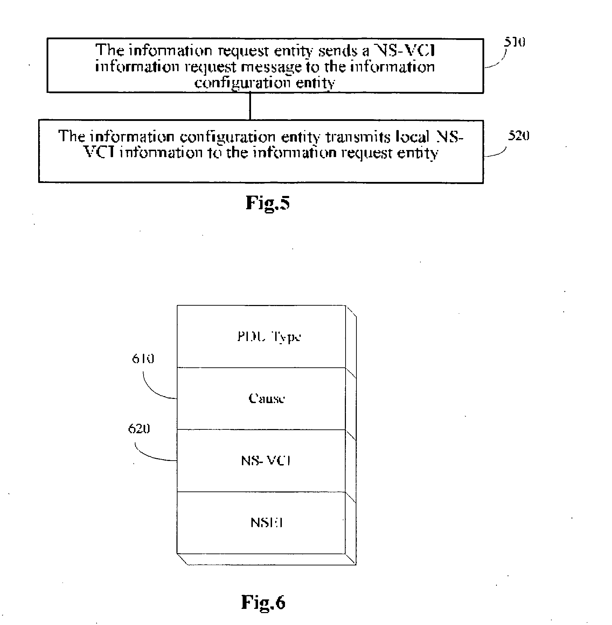

Referring to Figure 5, in an interface configuration method in a mobile packet network according to an embodiment of the present invention, an information request entity initiates a process of configuring NS-VCI information to an information configuration entity. The information configuration entity transmits local NS-VCI information to the information request entity, so as to maintain the consistency of configuration information. The information request entity and information configuration entity are entities at the two ends of an interface of the mobile packet network.

The specific process of the present embodiment includes:

Block 510: An information request entity at one end of an interface sends a NS-VCI information request message to an information configuration entity located at the other end of the interface.

Block 520: The information configuration entity, after receiving the NS-VCI information request message, sends local NS-VCI information to the information request entity.

In the GPRS mobile packet network, the interface refers to an interface between the GPRS network and the mobile communication network, the information request entity may be an entity at one end of the interface, and the information configuration entity may be an entity at the other end of the interface, corresponding to the information request entity.

In an embodiment of the present invention, the NS-VCI information at two ends of a Gb interface of the GPRS mobile packet network is configured automatically, so as to maintain the consistency of the NS-VCI information at the two ends.

In one embodiment of the present invention, information may be exchanged in combination with the NS_RESET process in the prior art. Information to be exchanged may be contained in an extended RESET-related message.

For example, a NS-VCI information request message may adopt the format of a NS_RESET message. The NS_RESET message as shown in Figure 6 includes a Cause field 610 and a NS-VCI (NS Virtual Connection Identifier) field 620, etc.

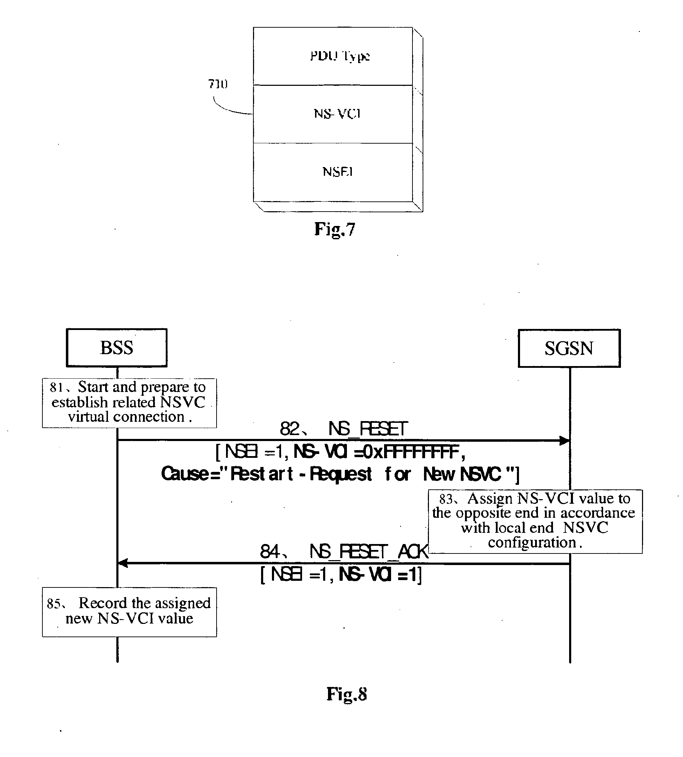

The NS-VCI information sent by the information configuration entity may be contained in a NS_RESET_ACK (Network Service protocol Reset Acknowledgement) message. The NS_RESET_ACK message is as shown in Figure 7, which includes a NS-VCI field 710, etc.

In other words, in a method according to an embodiment of the invention, the RESET message is extended in combination with the RESET session process to be initiated when creating a new NS-VC connection, so as to support the automatic configuration of NS-VCI.

In an embodiment of the present invention, the values of the Cause field and NS-VCI field in the NS_RESET message may be extended to indicate that the entity at the local end starts and needs the entity at the opposite end to distribute a new NSVC value. For example, Cause = "Restart - Request for New NSVC", the value 0xFFFFFFFF of NS-VCI field may be added to indicate that the entity at the local end starts and needs the entity at the opposite end to distribute a new NSVC value. After the extension, NS-VCI information may be configured automatically based on the NS_RESET message.

By way of example, when the request is initiated by a BSS, the NS-VCI information in the method according to an embodiment of the present invention is configured automatically as shown in Figure 8. This process is as follows:

Block 81: The BSS starts, and prepares to establish a related NSVC virtual connection;

It should be noted that, though in the example of Figure 8 the requester is a BSS, the requester may be a SGSN, which will not be repeated.

Block 82: The BSS sends an extended NS_RESET message to an entity at the opposite end, e.g., a SGSN, waiting the SGSN to assign a new NSVC value for the BSS.

The entity at the opposite end may be either a SGSN or a BSS, corresponding to the requester. In other words, the entity at the opposite end is a SGSN if the requester is a BSS, while the entity at the opposite end is a BSS if the requester is a SGSN.

Block 83: When receiving the extended NS_RESET message, the SGSN in charge of the related NSVC configuration information, i.e., the assigner, assigns a NS-VCI value to the BSS in accordance with the NSVC configuration of the entity of local end (i.e., the assigner).

Block 84: The SGSN fills the NS-VCI value assigned by the SGSN according to the NSVC configuration of local end into a NS_RESET_ACK acknowledgement message, and sends the NS_RESET_ACK acknowledgement message to the requester BSS.

Block 85: When receiving the NS_RESET_ACK acknowledgement message, the requester BSS obtains the NS-VCI value assigned by the SGSN from the NS_RESET_ACK acknowledgement message, records the newly assigned NS-VCI value. In this way, the NS-VC configuration on the Gb interface is completed.

In the embodiments of the present invention, the NS-VCI information may be configured by a management interface of either the BSS side or the SGSN side, as long as interface configuration information of the networks at both sides becomes consistent, i.e., the NS-VCI information on the entities at both sides is consistent. The present invention has no limitation on this.

In addition, in the block 83 of this embodiment of the present invention, after receiving the extended NS_RESET message, the entity at the opposite end may perform a reset process and return a NS-VCI value to the requester, or may directly return a NS-VCI value to the requester without the reset process. The present invention has no limitation on this.

It may be appreciated that the method according to the embodiments of the present invention provides a satisfying compatibility. Therefore, the normal operation of a network will not be affected, neither will the originally existing network services be affected adversely, even when the entity at the opposite end is a network device which does not support the method according to an embodiment the present invention. This is because the reset process will not be performed according to the extended RESET message during the above process according to the embodiments of the present invention if the BSS or the SGSN, in charge of the NS-VCI information assignment and management, does not support such extended RESET message, since the BSS or the SGSN is unable to recognize the information of some fields in such extended RESET message.

In addition, the entity receiving the extended RESET message may recognize that this message is a RESET message. Therefore, this entity receiving the RESET message may return the NS-VCI information in a NS_RESET_ACK acknowledgement message to the entity sending the RESET message. Alternatively the entity receiving the RESET message may not return a NS_RESET_ACK acknowledgement message to the entity sending the RESET message because part of the content information in the received RESET message is unrecognizable. Nevertheless, neither of the two methods will have any affect on the network operation.

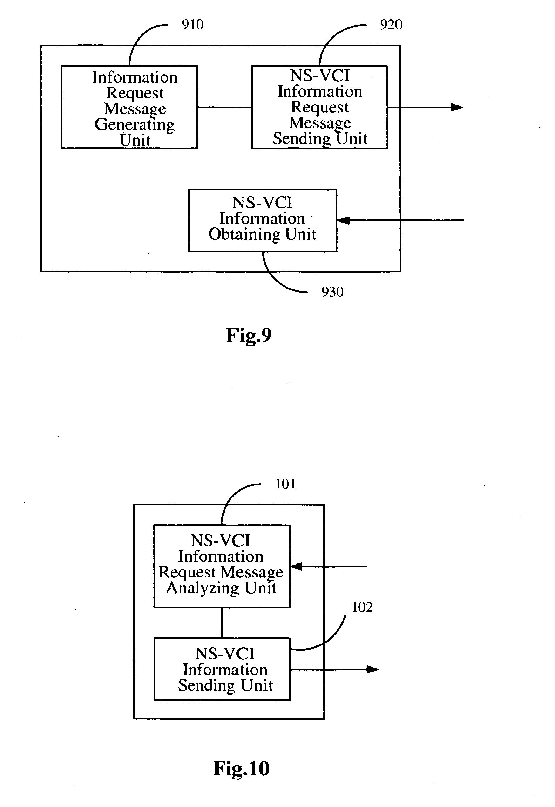

Figure 9 is a block diagram of an information request device according to an embodiment of the present invention.

In one embodiment of the present invention, the information request device includes: an information request message generating unit 910 adapted to generate a NS-VCI information request message;

a NS-VCI information request message sending unit 920 adapted to send the NS-VCI information request message to an entity at the other end of interface;

a NS-VCI information obtaining unit 930 adapted to obtain NS-VCI information returned by the entity at the other end of the interface in response to the NS-VCI information request message.

In an embodiment, the information request message generating unit is a NS_RESET message generating unit, adapted to carry NS-VCI information request in the NS_RESET message. Particularly, the NS_RESET message may be generated by extending the NS_RESET message in the prior art.

The NS-VCI information obtaining unit may be a NS_RESET_ACK message processing unit, adapted to obtain the NS-VCI information from the NS_RESET_ACK message returned from the entity at the other end of the interface.

The information request device may be arranged in a BSS or a SGSN.

Figure 10 is a block diagram of an information configuration device according to an embodiment of the present invention.

In one embodiment of the present invention, the information configuration device includes:

a NS-VCI information request message analyzing unit 101, adapted to analyze a NS-VCI information request message sent from an entity at the other end of an interface;

a NS-VCI information sending unit 102, adapted to send local NS-VCI information to the entity at the other end of the interface in accordance with the NS-VCI information request message.

In an embodiment, the NS-VCI information request message analyzing unit may be a NS_RESET message analyzing unit, adapted to determine whether a NS_RESET message sent from the entity at the other end of the interface contains NS-VCI information request.

The NS-VCI information sending unit may include: a NS_RESET_ACK message generating unit adapted to carry local NS-VCI information in a NS_RESET_ACK message; a NS_RESET_ACK message sending unit adapted to send the NS_RESET_ACK message to the entity at the other end of the interface.

The information configuration device may be arranged in a BSS or a SGSN.

In summary, in the embodiments of the present invention, the NSVC configuration information on a Gb interface may be configured and managed uniformly by extending a RESET message of NS protocol. This simplifies the NS-VC interface configuration significantly, relieves those in charge of configuration and management of heavy workload, and reduces the risk of network failure due to errors in configuration data.

While some embodiments of the invention have been described above, the protection scope of the present invention is not limited to these. Any substitutions or alternations readily occurred to a person of ordinary skill in the art are intended to be encompassed in the scope of the present invention as defined by the appending Claims.

## Claims

1. A method for interface configuration in a mobile packet network, **characterized by** comprising:
in a General Packet Radio Service mobile packet network, hereinafter referred to as GPRS mobile packet network, sending, by a first entity at one end of a Gb interface between a Base Station Subsystem, hereinafter referred to as BSS, and a Serving GPRS Support Node, hereinafter referred to as SGSN, a Network Service protocol Virtual Connection Identifier information request message, hereinafter referred to as NS-VCI information request message, to a second entity at the other end of the interface (510), wherein the NS-VCI information request message includes NS-VCI information request;
receiving, by the first entity, NS-VCI information which is returned by the second entity when the second entity receives the NS-VCI information request message (520);
the first entity being the BSS and the second entity being the SGSN, or the first entity being the SGSN and the second entity being the BSS.

2. The method for interface configuration in a mobile packet network according to claim 1, **characterized in that**, sending by the first entity the NS-VCI information request message to the second entity comprises:
sending a Network Service protocol Reset message, hereinafter referred to as NS_RESET message, to the second entity, the NS_RESET message carrying NS-VCI information request.

3. The method for interface configuration in a mobile packet network according to claim 2, **characterized in that**, the NS-VCI information request is carried in the NS_RESET message by:
adding information of a new cause value configured to request for a new Network Service protocol Virtual Connection, hereinafter referred to as NSVC, and adding a NS-VCI field value indicating the second entity to assign a new NS-VCI value.

4. The method for interface configuration in a mobile packet network according to claim 3, **characterized in that**, the NS-VCI information request message is sent by the first entity to the second entity when the first entity starts, the first entity is an entity requiring NS-VCI configuration.

5. A method for interface configuration in a mobile packet network, **characterized by** comprising:
in a General Packet Radio Service mobile packet network, hereinafter referred to as GPRS mobile packet network, receiving, by a first entity at one end of a Gb interface between a Base Station Subsystem, hereinafter referred to as BSS, and a Serving GPRS Support Node, hereinafter referred to as SGSN, a Network Service protocol Virtual Connection Identifier information request message, hereinafter referred to as NS-VCI information request message, sent from a second entity at the other end of the interface;
processing the NS-VCI information request message, to obtain NS-VCI information request contained in the NS-VCI information request message;
returning, by the first entity, local NS-VCI information to the second entity based on the NS-VCI information request;
the first entity being the BSS and the second entity being the SGSN, or the first entity being the SGSN and the second entity being the BSS.

6. The method for interface configuration in a mobile packet network according to claim 5, **characterized in that** the NS-VCI information request message is a Network Service protocol Reset message, hereinafter referred to as NS_RESET message, carrying NS-VCI information request (82).

7. The method for interface configuration in a mobile packet network according to claim 6, **characterized in that**, returning by the first entity the local NS-VCI information comprises:
returning a Network Service protocol Reset Acknowledgement message, hereinafter referred to as NS_RESET_ACK message, containing the local NS-VCI information to the second entity (84).

8. The method for interface configuration in a mobile packet network according to claim 5, **characterized in that**, before returning by the first entity the local NS-VCI information, the method further comprises: performing a reset process at the first entity.

9. The method for interface configuration in a mobile packet network according to claim 7, **characterized in that**, returning by the first entity local NS-VCI information to the second entity comprises: sending a NS_RESET_ACK message containing the local NS-VCI information to the second entity when the first entity fails to recognize the NS-VCI information request message.

10. An information request device, **characterized in that**, comprising:
a Network Service protocol Virtual Connection Identifier, hereinafter referred to as NS-VCI, information request message generating unit (910), adapted to generate a NS-VCI information request message containing NS-VCI information request;
a NS-VCI information request message sending unit (920), adapted to send the NS-VCI information request message to an entity at the other end of a Gb interface between a Base Station Subsystem, hereinafter referred to as BSS, and a Serving GPRS Support Node, hereinafter referred to as SGSN;
a NS-VCI information obtaining unit (930), adapted to obtain NS-VCI information returned by the entity at the other end of the interface in response to the NS-VCI information request message;
the entity being the BSS, or the entity being the SGSN.

11. The information request device according to claim 10, **characterized in that**, the NS-VCI information request message generating unit (910) is a Network Service protocol Reset, hereinafter referred to as NS_RESET, message generating unit adapted to carry NS-VCI information request in a NS_RESET message to generate a NS-VCI information request message;
the NS-VCI information obtaining unit (930) is a Network Service protocol Reset Acknowledgement, hereinafter referred to as NS_RESET_ACK, message processing unit adapted to obtain NS-VCI information from a NS_RESET_ACK message returned from the entity at the other end of the interface.

12. An information configuration device, **characterized by** comprising:
a Network Service protocol Virtual Connection Identifier, hereinafter referred to as NS-VCI, information request message analyzing unit (101), adapted to analyze a NS-VCI information request message sent from an entity at the other end of a Gb interface between a Base Station Subsystem, hereinafter referred to as BSS, and a Serving GPRS Support Node, hereinafter referred to as SGSN, to obtain NS-VCI information request contained in the NS-VCI information request message;
a NS-VCI information sending unit (102), adapted to send local NS-VCI information to the entity at the other end of the interface according to the NS-VCI information request;
the entity being the BSS, or the entity being the SGSN.

13. The information configuration device according to claim 12, **characterized in that**, the NS-VCI information request message analyzing unit (101) is a Network Service protocol Reset, hereinafter referred to as NS_RESET, message analyzing unit adapted to determine that the NS_RESET message sent from the entity at the other end of the interface carries NS-VCI information request;
the NS-VCI information sending unit (102) comprises: a Network Service protocol Reset Acknowledgement, hereinafter referred to as NS_RESET_ACK, message generating unit adapted to carry the local NS-VCI information in a NS_RESET_ACK message; a NS_RESET_ACK message sending unit adapted to send the NS_RESET_ACK message to the entity at the other end of the interface.

14. A Serving GPRS Support Node, hereinafter referred to as SGSN, comprising an information request device according to claim 10 or 11, and/or an information configuration device according to claim 12 or 13.

15. A Base Station Subsystem, hereinafter referred to as BSS, comprising an information request device according to claim 10 or 11, and/or an information configuration device according to claim 12 or 13.

## Patentansprüche

1. Verfahren zur Schnittstellenkonfiguration in einem Mobilpaketnetz, **dadurch gekennzeichnet, dass** es enthält:
in einem Mobilpaketnetz eines General Packet Radio Service, das nachstehend als GPRS-Mobilpaketnetz bezeichnet wird, Senden einer Meldung zum Anfordern von Informationen eines Identifikators für eine virtuelle Verbindung eines Netzdienstprotokolls, die nachstehend als NS-VCI-Informationsanforderungsmeldung bezeichnet wird, durch eine erste Entität an einem Ende einer Gb-Schnittstelle zwischen einem Basisstationsuntersystem, das nachstehend als BSS bezeichnet wird, und einem Dienst-GPRS-Unterstützungsknoten, der nachstehend als SGSN bezeichnet wird, zu einer zweiten Entität am anderen Ende der Schnittstelle (510), wobei die NS-VCI-Informationsanforderungsmeldung eine NS-VCI-Informationsanforderung enthält;
Empfangen von NS-VCI-Informationen durch die erste Entität, die durch die zweite Entität zurückgesendet werden, wenn die zweite Entität die NS-VCI-Informationsanforderungsmeldung empfängt (520);
wobei die erste Entität das BSS ist und die zweite Entität der SGSN ist oder die erste Entität der SGSN ist und die zweite Entität das BSS ist.

2. Verfahren zur Schnittstellenkonfiguration in einem Mobilpaketnetz nach Anspruch 1, **dadurch gekennzeichnet, dass** das Senden der NS-VCI-Informationsanforderungsmeldung durch die erste Entität zur zweiten Entität enthält:
Senden einer Netzdienstprotokoll-Rücksetzmeldung, die nachstehend als NS_RESET-Meldung bezeichnet wird, zur zweiten Entität, wobei die NS_RESET-Meldung die NS-VCI-Informationsanforderung trägt.

3. Verfahren zur Schnittstellenkonfiguration in einem Mobilpaketnetz nach Anspruch 2, **dadurch gekennzeichnet, dass** die NS-VCI-Informationsanforderung in der NS_RESET-Meldung getragen wird durch:
Hinzufügen von Informationen eines neuen Ursachenwerts, der zum Anfordern einer neuen virtuellen Verbindung eines Netzdienstprotokolls konfiguriert ist, die nachstehend als NSVC bezeichnet wird, und Hinzufügen eines NS-VCI-Feldwerts, der der zweiten Entität angibt, einen neuen NS-VCI-Wert zuzuweisen.

4. Verfahren zur Schnittstellenkonfiguration in einem Mobilpaketnetz nach Anspruch 3, **dadurch gekennzeichnet, dass** die NS-VCI-Informationsanforderungsmeldung durch die erste Entität zur zweiten Entität gesendet wird, wenn die erste Entität startet, wobei die erste Entität eine Entität ist, die eine NS-VCI-Konfiguration erfordert.

5. Verfahren zur Schnittstellenkonfiguration in einem Mobilpaketnetz, **dadurch gekennzeichnet, dass** es enthält:
in einem Mobilpaketnetz eines General Packet Radio Service, das nachstehend als GPRS-Mobilpaketnetz bezeichnet wird, Empfangen einer Meldung zum Anfordern von Informationen eines Identifikators für eine virtuelle Verbindung eines Netzdienstprotokolls, die nachstehend als NS-VCI-Informationsanforderungsmeldung bezeichnet wird, durch eine erste Entität an einem Ende einer Gb-Schnittstelle zwischen einem Basisstationsuntersystem, das nachstehend als BSS bezeichnet wird, und einem Dienst-GPRS-Unterstützungsknoten, der nachstehend als SGSN bezeichnet wird, die von einer zweiten Entität am anderen Ende der Schnittstelle gesendet wird;
Verarbeiten der NS-VCI-Informationsanforderungsmeldung, um eine NS-VCI-Informationsanforderung zu erhalten, die in der NS-VCI-Informationsanforderungsmeldung enthalten ist;
Zurücksenden von lokalen NS-VCI-Informationen durch die erste Entität zur zweiten Entität auf der Basis der NS-VCI-Informationsanforderung;
wobei die erste Entität das BSS ist und die zweite Entität der SGSN ist oder die erste Entität der SGSN ist und die zweite Entität das BSS ist.

6. Verfahren zur Schnittstellenkonfiguration in einem Mobilpaketnetz nach Anspruch 5, **dadurch gekennzeichnet, dass** die NS-VCI-Informationsanforderungsmeldung eine Netzdienstprotokoll-Rücksetzmeldung ist, die nachstehend als NS RESET-Meldung bezeichnet wird und die die NS-VCI-Informationsanforderung (82) trägt.

7. Verfahren zur Schnittstellenkonfiguration in einem Mobilpaketnetz nach Anspruch 6, **dadurch gekennzeichnet, dass** das Zurücksenden der lokalen NS-VCI-Informationen durch die erste Entität enthält:
Zurücksenden einer Netzdienstprotokoll-Rücksetzbestätigungsmeldung, die nachstehend als NS_RESET_ACK-Meldung bezeichnet wird und die die lokalen NS-VCI-Informationen enthält, zur zweiten Entität (84).

8. Verfahren zur Schnittstellenkonfiguration in einem Mobilpaketnetz nach Anspruch 5, **dadurch gekennzeichnet, dass** vor dem Zurücksenden der lokalen NS-VCI-Informationen durch die erste Entität das Verfahren ferner enthält: Durchführen eines Rücksetzprozesses an der ersten Entität.

9. Verfahren zur Schnittstellenkonfiguration in einem Mobilpaketnetz nach Anspruch 7, **dadurch gekennzeichnet, dass** das Zurücksenden der lokalen NS-VCI-Informationen durch die erste Entität zur zweiten Entität enthält: Senden einer NS_RESET_ACK-Meldung, die die lokalen NS-VCI-Informationen enthält, zur zweiten Entität, wenn die erste Entität die NS-VCI-Informationsanforderungsmeldung nicht erkennt.

10. Informationsanforderungsvorrichtung, **dadurch gekennzeichnet, dass** sie enthält:
eine Erzeugungseinheit (910) für eine Meldung zum Anfordern von Informationen eines Identifikators für eine virtuelle Verbindung eines Netzdienstprotokolls, der nachstehend als NS-VCI bezeichnet wird, die dazu ausgelegt ist, eine NS-VCI-Informationsanforderungsmeldung zu erzeugen, die die NS-VCI-Informationsanforderung enthält;
eine NS-VCI-Informationsanforderungsmeldungs-Sendeeinheit (920), die dazu ausgelegt ist, die NS-VCI-Informationsanforderungsmeldung zu einer Entität am anderen Ende einer Gb-Schnittstelle zwischen einem Basisstationsuntersystem, das nachstehend als BSS bezeichnet wird, und einem Dienst-GPRS-Unterstützungsknoten, der nachstehend als SGSN bezeichnet wird, zu senden;
eine NS-VCI-Informations-Erhaltungseinheit (930), die dazu ausgelegt ist, NS-VCI-Informationen zu erhalten, die durch die Entität am anderen Ende der Schnittstelle in Reaktion auf die NS-VCI-Informationsanforderungsmeldung zurückgesendet werden;
wobei die Entität das BSS ist oder die Entität der SGSN ist.

11. Informationsanforderungsvorrichtung nach Anspruch 10, **dadurch gekennzeichnet, dass** die NS-VCI-Informationsanforderungsmeldungs-Erzeugungseinheit (910) eine Erzeugungseinheit für eine Meldung für Netzdienstprotokoll-Rücksetzen ist, das nachstehend als NS_RESET bezeichnet wird, die dazu ausgelegt ist, die NS-VCI-Informationsanforderung in einer NS_RESET-Meldung zu tragen, um eine NS-VCI-Informationsanforderungsmeldung zu erzeugen;
die NS-VCI-Informations-Erhaltungseinheit (930) eine Verarbeitungseinheit für die Meldung der Netzdienstprotokoll-Rücksetzbestätigung ist, die nachstehend als NS_RESET_ACK bezeichnet wird, die dazu ausgelegt ist, NS-VCI-Informationen aus einer NS_RESET_ACK-Meldung zu erhalten, die von der Entität am anderen Ende der Schnittstelle zurückgesendet wird.

12. Informationskonfigurationsvorrichtung, **dadurch gekennzeichnet, dass** sie enthält:
eine Analyseeinheit (101) für eine Meldung zum Anfordern von Informationen eines Identifikators für eine virtuelle Verbindung eines Netzdienstprotokolls, der nachstehend als NS-VCI bezeichnet wird, die dazu ausgelegt ist, eine NS-VCI-Informationsanforderungsmeldung zu analysieren, die von einer Entität am anderen Ende einer Gb-Schnittstelle zwischen einem Basisstationsuntersystem, das nachstehend als BSS bezeichnet wird, und einem Dienst-GPRS-Unterstützungsknoten, der nachstehend als SGSN bezeichnet wird, gesendet wird, um die NS-VCI-Informationsanforderung zu erhalten, die in der NS-VCI-Informationsanforderungsmeldung enthalten ist;
eine NS-VCI-Informations-Sendeeinheit (102), die dazu ausgelegt ist, lokale NS-VCI-Informationen zu der Entität am anderen Ende der Schnittstelle gemäß der NS-VCI-Informationsanforderung zu senden;
wobei die Entität das BSS ist oder die Entität der SGSN ist.

13. Informationskonfigurationsvorrichtung nach Anspruch 12, **dadurch gekennzeichnet, dass** die NS-VCI-Informationsanforderungsmeldungs-Analyseeinheit (101) eine Analyseeinheit für eine Meldung für Netzdienstprotokoll-Rücksetzen ist, das nachstehend als NS_RESET bezeichnet wird, die dazu ausgelegt ist festzustellen, dass die von der Entität am anderen Ende der Schnittstelle gesendete NS_RESET-Meldung die NS-VCI-Informationsanforderung trägt;
die NS-VCI-Informations-Sendeeinheit (102) enthält: eine Erzeugungseinheit für eine Meldung einer Netzdienstprotokoll-Rücksetzbestätigung, die nachstehend als NS_RESET_ACK bezeichnet wird, die dazu ausgelegt ist, die lokalen NS-VCI-Informationen in einer NS_RESET_ACK-Meldung zu tragen; eine NS_RESET_ACK-Meldungs-Sendeeinheit, die dazu ausgelegt ist, die NS_RESET_ACK-Meldung zu der Entität am anderen Ende der Schnittstelle zu senden.

14. Dienst-GPRS-Unterstützungsknoten, der nachstehend als SGSN bezeichnet wird, mit einer Informationsanforderungsvorrichtung nach Anspruch 10 oder 11 und/oder einer Informationskonfigurationsvorrichtung nach Anspruch 12 oder 13.

15. Basisstationsuntersystem, das nachstehend als BSS bezeichnet wird, mit einer Informationsanforderungsvorrichtung nach Anspruch 10 oder 11 und/oder einer Informationskonfigurationsvorrichtung nach Anspruch 12 oder 13.

## Revendications

1. Procédé de configuration d'interface dans un réseau mobile de transmission par paquets, **caractérisé en ce qu'**il comprend :
dans un réseau mobile de transmission par paquets à Service Radio de Transmission par Paquets Général, appelé ci-après réseau mobile de transmission par paquets GPRS, l'envoi, par une première entité située à une extrémité d'une interface Gb entre un Sous-Système de Station de Base, appelé ci-après BSS, et un Noeud de Support GPRS de Desserte, appelé ci-après SGSN, d'un message de demande d'informations d'Identifiant de Connexion Virtuelle de protocole de Service Réseau, appelé ci-après message de demande d'informations NS-VCI, à une seconde entité située à l'autre extrémité de l'interface (510), le message de demande d'informations NS-VCI comportant la demande d'informations NS-VCI ;
la réception, par la première entité, d'informations NS-VCI qui sont renvoyées par la seconde entité quand la seconde entité reçoit le message de demande d'informations NS-VCI (520) ;
la première entité étant le BSS et la seconde entité étant le SGSN, ou bien la première entité étant le SGSN et la seconde entité étant le BSS.

2. Procédé de configuration d'interface dans un réseau mobile de transmission par paquets selon la revendication 1, **caractérisé en ce que** l'envoi par la première entité du message de demande d'informations NS-VCI à la seconde entité comprend :
l'envoi d'un message de Rétablissement de protocole de Service Réseau, appelé ci-après message NS_RESET, à la seconde entité, le message NS_RESET portant la demande d'informations NS-VCI.

3. Procédé de configuration d'interface dans un réseau mobile de transmission par paquets selon la revendication 2, **caractérisé en ce que** la demande d'informations NS-VCI est portée dans le message NS_RESET en :
ajoutant des informations d'une nouvelle valeur de cause configurée pour demander une nouvelle Connexion Virtuelle de protocole de Service Réseau, appelée ci-après NSVC, et ajoutant une valeur de champ NS-VCI indiquant à la seconde entité d'assigner une nouvelle valeur NS-VCI.

4. Procédé de configuration d'interface dans un réseau mobile de transmission par paquets selon la revendication 3, **caractérisé en ce que** le message de demande d'informations NS-VCI est envoyé par la première entité à la seconde entité quand la première entité démarre, la première entité étant une entité demandant une configuration NS-VCI.

5. Procédé de configuration d'interface dans un réseau mobile de transmission par paquets, **caractérisé en ce qu'**il comprend :
dans un réseau mobile de transmission par paquets à Service Radio de Transmission par Paquets Général, appelé ci-après réseau mobile de transmission par paquets GPRS, la réception, par une première entité située à une extrémité d'une interface Gb entre un Sous-Système de Station de Base, appelé ci-après BSS, et un Noeud de Support GPRS de Desserte, appelé ci-après SGSN, d'un message de demande d'informations d'Identifiant de Connexion Virtuelle de protocole de Service Réseau, appelé ci-après message de demande d'informations NS-VCI, envoyé à partir d'une seconde entité située à l'autre extrémité de l'interface ;
le traitement du message de demande d'informations NS-VCI afin d'obtenir la demande d'informations NS-VCI contenue dans le message de demande d'informations NS-VCI ;
le renvoi, par la première entité, d'informations NS-VCI locales à la seconde entité en fonction de la demande d'informations NS-VCI ;
la première entité étant le BSS et la seconde entité étant le SGSN, ou la première entité étant le SGSN et la seconde entité étant le BSS.

6. Procédé de configuration d'interface dans un réseau mobile de transmission par paquets selon la revendication 5, **caractérisé en ce que** le message de demande d'informations NS-VCI est un message de Rétablissement de protocole de Service Réseau, appelé ci-après message NS_RESET, portant la demande d'informations NS-VCI (82).

7. Procédé de configuration d'interface dans un réseau mobile de transmission par paquets selon la revendication 6, **caractérisé en ce que** le renvoi par la première entité des informations NS-VCI comprend :
le renvoi à la seconde entité (84) d'un message d'Acquittement de Rétablissement de protocole de Service Réseau, appelé ci-après message NS_RESET_ACK, contenant les informations NS-VCI locales.

8. Procédé de configuration d'interface dans un réseau mobile de transmission par paquets selon la revendication 5, **caractérisé en ce que**, avant le renvoi par la première entité des informations NS-VCI locales, le procédé comprend en outre :
l'exécution d'un processus de rétablissement au niveau de la première entité.

9. Procédé de configuration d'interface dans un réseau mobile de transmission par paquets selon la revendication 7, **caractérisé en ce que** le renvoi par la première entité d'informations NS-VCI locales à la seconde entité comprend : l'envoi d'un message NS_RESET_ACK contenant les informations NS-VCI locales à la seconde entité quand la première entité ne reconnaît pas le message de demande d'informations NS-VCI.

10. Dispositif de demande d'informations, **caractérisé en ce qu'**il comprend :
une unité de génération de message de demande d'informations d'Identifiant de Connexion Virtuelle de protocole de Service Réseau, appelé ci-après NS-VCI (910), adaptée pour générer un message de demande d'informations NS-VCI contenant une demande d'informations NS-VCI ;
une unité d'envoi de message de demande d'informations NS-VCI (920), adaptée pour envoyer le message de demande d'informations NS-VCI à une entité située à l'autre extrémité d'une interface Gb entre un Sous-Système de Station de Base, appelé ci-après BSS, et un Noeud de Support GPRS de Desserte, appelé ci-après SGSN ;
une unité d'obtention d'informations NS-VCI (930), adaptée pour obtenir des informations NS-VCI renvoyées par l'entité se trouvant à l'autre extrémité de l'interface en réponse au message de demande d'informations NS-VCI ;
l'entité étant le BSS, ou bien l'entité étant le SGSN.

11. Dispositif de demande d'informations selon la revendication 10, **caractérisé en ce que** l'unité de génération de message de demande d'informations NS-VCI (910) est une unité de génération de message de Rétablissement de protocole de Service Réseau, appelé ci-après message NS_RESET, adaptée pour porter une demande d'informations NS-VCI dans un message NS_RESET afin de générer un message de demande d'informations NS-VCI ;
l'unité d'obtention d'informations NS-VCI (930) est une unité de traitement de message d'Acquittement de Rétablissement de protocole de Service Réseau, ci-après appelé NS_RESET_ACK, adaptée pour obtenir des informations NS-VCI depuis un message NS_RESET_ACK renvoyé à partir de l'entité située à l'autre extrémité de l'interface.

12. Dispositif de configuration d'informations, **caractérisé en ce qu'**il comprend :
une unité d'analyse de message de demande d'informations d'Identifiant de Connexion Virtuelle de protocole de Service Réseau, appelé ci-après NS-VCI (101), adaptée pour analyser un message de demande d'informations NS-VCI envoyé à partir d'une entité située à l'autre extrémité d'un interface Gb entre un Sous-Système de Station de Base, appelé ci-après BSS, et un Noeud de Support GPRS de Desserte, appelé ci-après SGSN, afin d'obtenir une demande d'informations NS-VCI contenue dans le message de demande d'informations NS-VCI ;
une unité d'envoi d'informations NS-VCI (102), adaptée pour envoyer des informations NS-VCI locales à l'entité située à l'autre extrémité de l'interface en fonction de la demande d'informations NS-VCI ;
l'entité étant le BSS, ou bien l'entité étant le SGSN.

13. Dispositif de configuration d'informations selon la revendication 12, **caractérisé en ce que** l'unité d'analyse de message de demande d'informations NS-VCI (101) est une unité d'analyse de message de Rétablissement de protocole de Service Réseau, appelé ci-après NS_RESET, adaptée pour déterminer que le message NS_RESET envoyé à partir de l'entité située à l'autre extrémité de l'interface porte une demande d'informations NS-VCI ;
l'unité d'envoi d'informations NS-VCI (102) comprend : une unité de génération de message d'Acquittement de Rétablissement de protocole de Service Réseau, appelé ci-après message NS_RESET_ACK, adaptée pour porter les informations NS-VCI locales dans un message NS_RESET_ACK ; une unité d'envoi de message NS_RESET_ACK adaptée pour envoyer le message NS_RESET_ACK à l'entité située à l'autre extrémité de l'interface.

14. Noeud de Support GPRS de Desserte, appelé ci-après SGSN, comprenant un dispositif de demande d'informations selon la revendication 10 ou 11, et/ou un dispositif de configuration d'informations selon la revendication 12 ou 13.

15. Sous-Système de Station de Base, appelé ci-après BSS, comprenant un dispositif de demande d'informations selon la revendication 10 ou 11, et/ou un dispositif de configuration d'informations selon la revendication 12 ou 13.
